Europäisches Patentamt

(19) European Patent Office

Office européen des brevets

(11) Publication number: **0 113 682**
**B1**

(12) # EUROPEAN PATENT SPECIFICATION

(45) Date of publication of patent specification: **24.10.90**

(51) Int. Cl.⁵: **G 05 B 19/405**

(21) Application number: **84100231.4**

(22) Date of filing: **11.01.84**

(54) **Numerical control system and method.**

(30) Priority: **11.01.83 JP 2643/83**

(43) Date of publication of application:
**18.07.84 Bulletin 84/29**

(45) Publication of the grant of the patent:
**24.10.90 Bulletin 90/43**

(84) Designated Contracting States:
**DE FR GB IT**

(56) References cited:
**EP-A-0 068 797**
**EP-A-0 089 561**
**EP-A-0 104 409**

**PROCEEDINGS OF THE 14TH ANNUAL
MEETING AND TECHNICAL CONFERENCE OF
THE NUMERICAL CONTROL SOCIETY, 13th-
16th March 1977, Pittsburgh, US, pages 337-51,
NCS Inc., Glenview, US; R.G. DREWRY: "NC
graphics for program debugging and tape
verification**

(73) Proprietor: **MITSUBISHI DENKI KABUSHIKI
KAISHA
2-3, Marunouchi 2-chome Chiyoda-ku
Tokyo 100 (JP)**

(72) Inventor: **Sekikawa, Katsuhide c/o Mitsubishi
Denki K.K.
Nagoya Works No. 1-14, Yadaminami 5-chome
Higashi-ku Nagoya-shi Aichi (JP)**

(74) Representative: **Lehn, Werner, Dipl.-Ing. et al
Hoffmann, Eitle & Partner Patentanwälte
Arabellastrasse 4
D-8000 München 81 (DE)**

Courier Press, Leamington Spa, England.

## Description

The present invention relates to a numerical control system (hereinafter referred to as an "NC" system), and to a method, including displaying images relating to the machined workpiece and tool.

NC systems are employed to numerically control the position of a tool with respect to a workpiece for machining the latter. NC systems are capable of machining objects of complex configurations with a high accuracy and relatively high production rates.

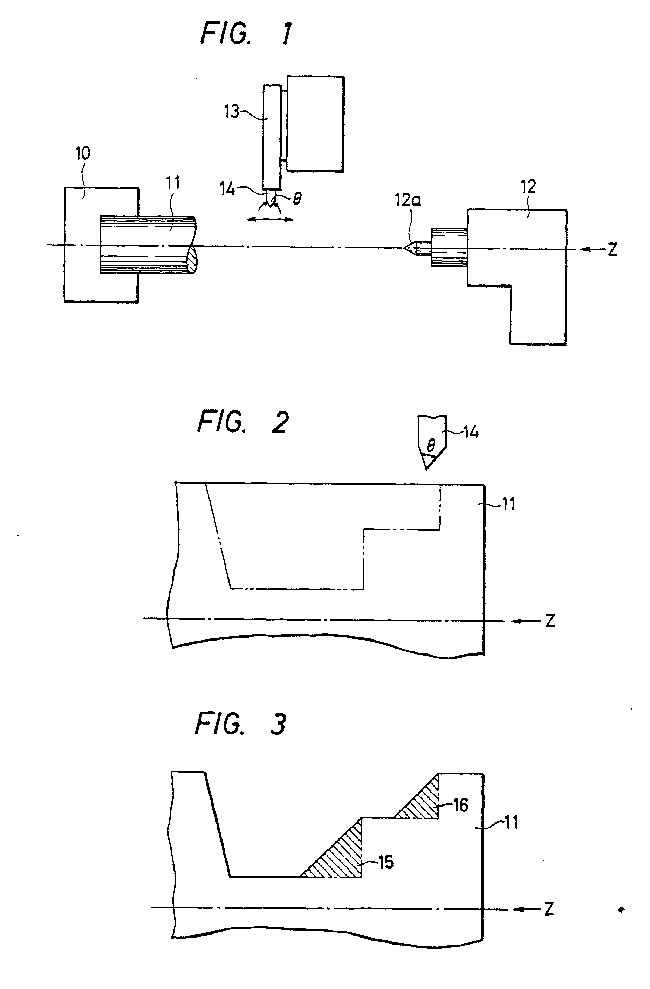

Fig. 1 of the accompanying drawings schematically shows a numerical control machine tool such as a lathe. A cylindrical workpiece 11 has one end clamped in position by a chuck 10 rotatable about a Z axis and the other end supported on a tip end 12a of a tail 12. The lathe has a turret 13 to which is fixed a cutter 14 for cutting the workpiece 11. When the workpiece 11 is to be cut, the turret 13 is moved in the direction of the arrow along the Z axis to cause the cutter 14 to cut the workpiece 11.

The cutter 14 has a finite limited cutting angle θ, and hence, without changing tools, the workpiece 11 cannot be cut by the cutter 14 to a final contour such as that indicated by a double-dot/dash line in Fig. 2 including surfaces normal to the Z axis. Accordingly, the first cutter 14 is normally effective only to cut the workpiece 11 to a main or rough contour as illustrated in Fig. 3, leaving portions 15 and 16, shown hatched, uncut. To then cut the uncut portions 15 and 16, it has been necessary for the operator to manually measure the uncut portions 15 and 16. Such a measurement process, however, is tedious and time consuming.

EP—A—0 068 797 describes a numerical control system in which an automatic programmer and at least one numerical control device are interconnected by a cable. A numerical control program prepared by the automatic programmer is transferred to the numerical control device. The automatic programmer includes an input unit for entering data, a processor which edits the data for producing a numerical control program, a memory for storing the complicated numerical control program and a display device which displays a graphic in accordance with the output of the processor. The numerical control device includes a memory for storing the numerical control program which is transferred from the automatic programmer via the cable. Such a system can enable programming and numerical control processing to be carried out concurrently.

The method according to EP—A—0 068 797 includes the steps of:

a) displaying the basic shape of the workpiece to be machined,

b) displaying the contour to be machined within the workpiece,

c) initiating a command for rough cutting,

d) displaying the contour machined during rough cutting,

e) preparing the next machining step on the basis of said previous machined contour.

With the foregoing difficulties in view, it is an object of the present invention to provide a method and and NC system in which uncut portions are computed from a finally machined workpiece contour and the shape of a cutter used for cutting the workpiece and are then displayed on a graphics display unit, so that the uncut portions can easily be checked and comprehended without executing an actual machining operation, and a cutter suitable for achieving the final contour can easily be selected.

According to a first aspect of the invention, this object is solved by a method of numerical control including the steps of:

a) displaying the basic shape of the workpiece to be machined,

b) displaying the contour to be machined within the workpiece,

c) initiating a command for rough cutting,

d) displaying the contour machined during rough cutting,

e) preparing the next machining step on the basis of said previous machined contour, characterized by

f) preparing the next machining step after the actually performed previous machining step by

g) displaying at the same time the desired final contour (19) and the contour (20) machined in the last machining step so that the finishing allowance due to the shape (14) of the cutter can be seen from the display,

h) computing a cutter path which takes into account cutter edge compensation,

i) erasing the finishing allowance on the display in such a manner that uncut portions (15, 16) are displayed as hatched portions.

A second aspect is subject-matter of claim 2.

A numerical machine tool control system for performing the methods according to the present invention includes

a) a numerical control unit for controlling the machine tool;

b) a graphic display unit connected to said numerical control unit; and

c) input means for entering data of a desired final machined contour and a cutter shape, characterized by

d) displaying means for displaying at the same time the desired final contour (19) and the contour (20) machined in the previous machining step so that the finishing allowance due to the shape (14) of the cutter can be seen from the display,

e) computing means for computing a cutter path which takes into account cutter edge compensation.

More specifically, data items indicating a workpiece configuration, a finally machined workpiece contour, and a cutter shape are entered through the input means, and the workpiece configuration and the finally machined workpiece contour are displayed on the graphics display unit. A cutter path subjected to cutter edge compensation is computed from the entered data items, and a finishing allowance can be erased from the display image along the cutter path to thereby display uncut portions. The uncut portions may also be displayed by determining intersections of the finally machined workpiece contour and machined contour and overlapping the intersections on the finally machined workpiece contour.

The above and other objects, features and advantages of the present invention will become more apparent from the following description when taken in conjunction with the accompanying drawings in which a preferred embodiment of the present invention is shown by way of illustrative example, and in which:

Fig. 1 is a schematic side elevational view of a lathe;

Fig. 2 is a fragmentary side elevational view showing the configuration of a workpiece to be machined, a final workpiece contour, and a cutter shape;

Fig. 3 is a fragmentary side elevational view illustrating uncut portions of the workpiece;

Fig. 4 is a fragmentary side elevational view of a workpiece as displayed on a graphics display unit in an NC system of the present invention;

Fig. 5 is a fragmentary side elevational view of the workpiece and a final workpiece contour as displayed on the graphics display unit;

Fig. 6 is a fragmentary side elevational view of the final workpiece contour and uncut portions as displayed on the graphics display unit;

Fig. 7 is a flowchart showing successive steps for displaying a workpiece and a cutter in accordance with the invention; and

Fig. 8 is a fragmentary side elevational view of the workpiece showing the intersections of the final contour and the machined contour.

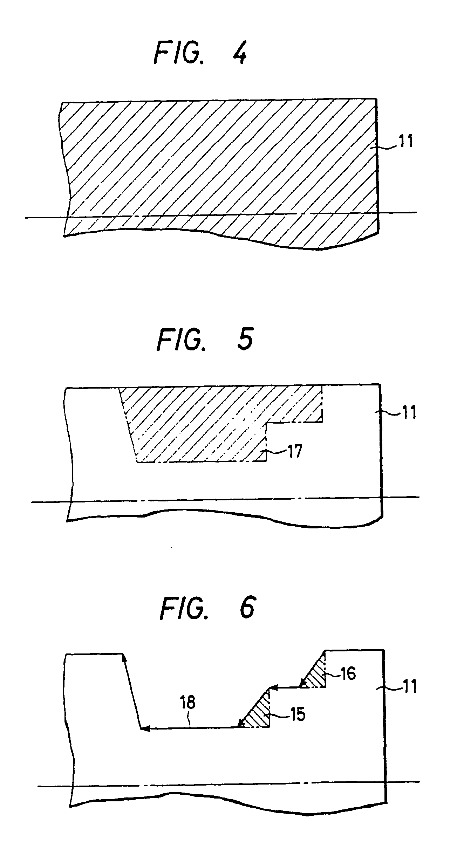

The present invention will now be described with reference to Figs. 4 through 8.

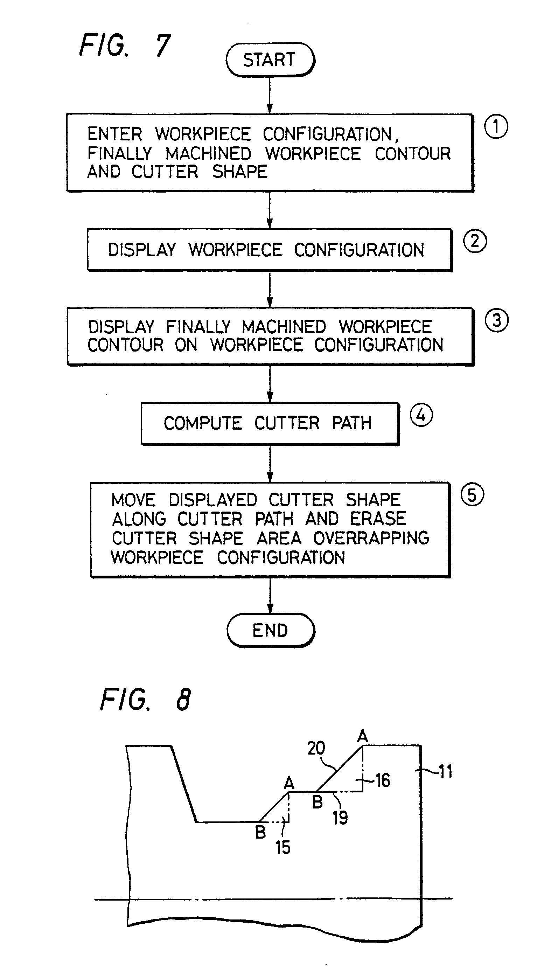

Figs. 4 through 6 show images as displayed on a graphics display unit in an NC system according to the present invention, and Fig. 7 illustrates successive steps of operation of the NC system of the invention.

As shown in Fig. 7, a workpiece configuration, a finally machined workpiece contour, and a cutter shape are entered through an input device into the NC system in a step 1, and the configuration of a workpiece 11 is selected out of the entered data items and displayed on the graphics display unit in a step 2. Fig. 4 shows such a displayed workpiece configuration which is indicated in color, for example. Then, the finally machined workpiece contour is displayed on the workpiece configuration in a step 3. Fig. 5 is illustrative of such combined images displayed on the graphics display unit. In Fig. 5, that portion which is enclosed by the workpiece edges and the double-dot/dash line is shown as a blank, with a finishing allowance 17 indicated by hatching. Thereafter, a cutter path 18, which takes into account cutter edge compensation, is computed in a step 4, and the finishing allowance 17 is erased from the displayed image along the cutter path 18. Fig. 6 illustrates such an erasing process. As a result of the erasing process, uncut portions are displayed as hatched portions 15 and 16.

Alternatively, as illustrated in Fig. 8, a finally machined workpiece contour 19, indicated by the double-dot/dash line, and a cutter shape may be employed as shown in Fig. 8 to extract intersections A and B of the finally machined workpiece contour 19 and a machined contour 20, and information on the intersections A and B may be combined with the finally machined workpiece contour 19 to display uncut portions 15 and 16.

It is preferable to employ a color display unit for displaying the finally machined workpiece contour 19 and the uncut portions 15 and 16 in different colors for enhanced visual effects.

With the arrangement of the present invention, the NC system is composed of input means for entering a finally machined workpiece contour and a cutter shape, and means responsive to input signals from the input means for effecting cutter edge shape compensation and displaying as a graphics image portions uncut due to the cutter shape on the basis of a contour subjected to cutter edge shape compensation and the finally machined workpiece contour. Accordingly, the uncut portions can easily be confirmed without having to execute actual cutting operations, and a reference is given for selecting an optimum cutter for a desired machined contour.

## Claims

1. A method of numerical control including the steps of:

a) displaying the basic shape of the workpiece to be machined,

b) displaying the contour to be machined within the workpiece,

c) initiating a command for rough cutting,

d) displaying the contour machined during rough cutting,

e) preparing the next machining step on the basis of said previous machined contour, characterized by

f) preparing the next machining step after the actually performed previous machining step by

g) displaying at the same time the desired final contour (19) and the contour (20) machined in the previous machining step so that the finishing allowance due to the shape (14) of the cutter can be seen from the display,

h) computing a cutter path which takes into account cutter edge compensation,

i) erasing the finishing allowances on the display in such a manner that uncut portions (15, 16) are displayed as hatched portions.

2. A method of numerical control including the steps of

a) displaying the basic shape of the workpiece to be machined,

b) displaying the contour to be machined within the workpiece,

c) initiating a command for rough cutting,

d) displaying the contour machined during rough cutting

e) preparing the next machining step on the basis of said previous machined contour, characterized by

f) preparing the next machining step after the actually performed previous machining step by

g) computing and displaying intersections (A, B) of the desired final contour (19) and a contour (20) machined in the previous machining step based on said final contour (19) and the cutter shape (14), and

h) displaying said intersections (A, B) and said final contour (19) in such a manner that uncut portions are displayed.

3. A numerical machine tool control system for performing a method according to claim 1 or 2, including:

a) a numerical control unit for controlling the machine tool;

b) a graphic display unit connected to said numerical control unit; and

c) input means for entering data of a desired final machined contour and a cutter shape, characterized by

d) displaying means for displaying at the same time the desired final contour (19) and the contour (20) machined in the previous machining step so that the finishing allowance due to the shape (14) of the cutter can be seen from the display,

e) computing means for computing a cutter path which takes into account cutter edge compensation.

**Patentansprüche**

1. Verfahren zur numerischen Steuerung mit den Schritten:

a) Anzeigen der Grundform eines zu bearbeitenden Werkstückes,

b) Anzeigen der zu bearbeitenden Kontur innerhalb des Werkstückes,

c) Einleiten eines Befehls für grobes Schneiden,

d) Anzeigen der während des groben Schneidens bearbeiteten Kontur,

e) Vorbereiten des nächsten Bearbeitungsschrittes basierend auf der vorherigen bearbeiteten Kontur, gekennzeichnet durch

f) Vorbereiten des nächsten Bearbeitungsschrittes nach dem tatsächlich durchgeführten vorherigen Bearbeitungsschritt durch

g) gleichzeitiges Anzeigen der gewünschten Endkontur (19) und der in dem vorherigen Bearbeitungsschritt bearbeiteten Kontur (20), so daß das Endbearbeitungsmaß infolge der Form (14) des Schneidwerkzeuges aus der Anzeige ersehen werden kann,

h) Ausrechnen eines Schneidwerkzeugwegs, bei dem Schneidwerkzeugkantenkompensation berücksichtigt ist,

i) Löschen des Endbearbeitungsmaßes in der Anzeige derart, daß nicht geschnittene Abschnitte (15, 16) als schraffierte Bereiche angezeigt werden.

2. Verfahren zur numerischen Steuerung mit den Schritten:

a) Anzeigen der Grundform eines zu bearbeitenden Werkstückes,

b) Anzeigen der zu bearbeitenden Kontur innerhalb des Werkstückes,

c) Einleiten eines Befehls für grobes Schneiden,

d) Anzeigen der während des groben Schneidens bearbeiteten Kontur,

e) Vorbereiten des nächsten Bearbeitungsschrittes basierend auf der vorherigen bearbeiteten Kontur, gekennzeichnet durch

f) Vorbereiten des nächsten Bearbeitungsschrittes nach dem tatsächlich durchgeführten vorherigen Bearbeitungsschritt durch

g) Berechnen und Anzeigen von Schnittpunkten (A, B) der gewünschten Endkontur (19) und einer in dem vorherigen Bearbeitungsschritt bearbeiteten Kontur (20) basierend auf der Endkontur (19) und der Schneidwerkzeugform (14), und

h) Anzeigen der Schnittpunkte (A, B) und der Endkontur (19) derart, daß nicht geschnittene Abschnitte angezeigt werden.

3. Numerisch gesteuertes Werkzeugmashinensystem zur Durchführung eines Verfahrens nach Anspruch 1 oder 2, mit:

a) einer numerischen Steuereinheit zum Steuern der Werkzeugmaschine,

b) einer Grafik-Anzeigeeinheit, die mit der numerischen Steuereinheit verbunden ist, und

c) Eingabemitteln zum Eingeben von Daten einer gewünschten bearbeiteten Endkontur und einer Schneidwerkzeugform, gekennzeichnet durch

d) Anzeigemittel zum gleichzeitigen Anzeigen der gewünschten Endkontur (19) und der in dem vorherigen Bearbeitungsschritt bearbeiteten Kontur (20), so daß das Endbearbeitungsmaß infolge der Form (14) des Schneidwerkzeugs aus der Anzeige ersehen werden kann,

e) Rechenmittel zum Berechnen eines Schneidwerkzeugwegs, bei dem Schneidwerkzeugkantenkompensation berücksichtigt ist.

**Revendications**

1. Procédé de commande numérique incluant les opérations qui consistent à:

a) visualiser la forme de base de la pièce à usiner,

b) visualiser le contour à usiner dans la pièce,

c) déclencher une commande de dégrossissage,

d) visualiser le contour usiné pendant le dégrossissage,

e) préparer l'opération d'usinage suivante en fonction du contour usiné précédemment, caractérisé en ce qu'il consiste à:

f) préparer l'opération d'usinage suivante après l'opération d'usinage effectivement exécutée précédemment en

g) visualisant en même temps le contour final voulu (19) et le contour (20) usiné dans l'operation d'usinage précédente de telle sorte que la tolérance de finissage due à la forme (14) de la fraise peut être examinée par visualisation,

h) calculant un trajet de fraise qui tient compte d'une compensation de bord de fraise,

i) effaçant la tolérance de finissage sur la visualisation de manière à ce que des parties non découpées (15, 16) soient visualisées comme des parties hachurées.

2. Procédé de commande numérique incluant les opérations qui consistent à:

a) visualiser la forme de base de la pièce à usiner,

b) visualiser le contour à usiner dans la pièce,

c) déclencher une commande de dégrossissage,

d) visualiser le contour usiné pendant le dégrossissage,

e) préparer l'opération d'usinage suivante en fonction du contour usiné précédemment, caractérisé en ce qu'il consiste à:

f) préparer l'opération d'usinage suivante après l'opération d'usinage effectivement exécutée précédemment qui consiste à

g) calculer et visualiser les intersections (A, B) du contour final voulu (19) et d'un contour (20) usiné dans l'opération d'usinage précédente en fonction du contour final (19) et de la forme de fraise (14), et à

h) visualiser les intersections (A, B) et le contour final (19) de manière à ce que des parties non découpées soient visualisées.

3. Système de commande de machine-outil numérique pour mettre en oeuvre le procédé selon l'une quelconque des revendications 1 et 2, comprenant:

a) une unité de commande numérique pour commander la machine-outil;

b) une unité de visualisation graphique connectée à l'unité de commande numérique; et

c) un moyen d'entrée pour introduire des données d'un contour usiné en dernier voulu et d'une forme de fraise, caractérisé par

d) un moyen de visualisation pour visualiser en même temps le contour final voulu (19) et le contour (20) usiné dans l'opération d'usinage précédente de telle sorte que la tolérance de finissage due à la forme (14) de la fraise peut être examinée par visualisation,

e) un moyen de calcul pour calculer un trajet de fraise qui tient compte d'une compensation de bord de fraise.

## FIG. 1

## FIG. 2

## FIG. 3

## FIG. 4

## FIG. 5

## FIG. 6

## FIG. 7

START

① ENTER WORKPIECE CONFIGURATION, FINALLY MACHINED WORKPIECE CONTOUR AND CUTTER SHAPE

② DISPLAY WORKPIECE CONFIGURATION

③ DISPLAY FINALLY MACHINED WORKPIECE CONTOUR ON WORKPIECE CONFIGURATION

④ COMPUTE CUTTER PATH

⑤ MOVE DISPLAYED CUTTER SHAPE ALONG CUTTER PATH AND ERASE CUTTER SHAPE AREA OVERRAPPING WORKPIECE CONFIGURATION

END

## FIG. 8